**Europäisches Patentamt**

(19) **European Patent Office**

**Office européen des brevets**

(11) Numéro de publication: **0 168 286**
**B1**

(12) **FASCICULE DE BREVET EUROPÉEN**

(45) Date de publication du fascicule du brevet:
12.08.87

(21) Numéro de dépôt: **85401106.1**

(22) Date de dépôt: **05.06.85**

(51) Int. Cl.⁴: **B 60 T 8/36**

(54) **Système de commande et de modulation de pression de freinage pour circuit de freinage à anti-blocage.**

(30) Priorité: **13.06.84 FR 8409206**

(43) Date de publication de la demande:
**15.01.86 Bulletin 86/3**

(45) Mention de la délivrance du brevet:
**12.08.87 Bulletin 87/33**

(84) Etats contractants désignés:
**DE GB IT NL SE**

(56) Documents cité:
**EP-A-0 105 219**
**FR-A-2 532 260**
**FR-A-2 536 493**
**GB-A-1 360 774**
**GB-A-1 402 363**
**GB-A-1 437 656**
**GB-A-2 020 764**
**GB-A-2 086 510**

**BOSCH TECHNISCHE BERICHTE, vol. 7, no. 2, 1980, pages 65-94; VON HEINZ LEIBER et al.: "Antiblockiesystem (ABS) für Personenkraftwagen"**

(73) Titulaire: **BENDIX France, 126, rue de Stalingrad, F-93700 Drancy (FR)**

(72) Inventeur: **Kervagoret, Gilbert, 5, Impasse Nobleterre, F-95100 Argenteuil (FR)**

(74) Mandataire: **Le Moenner, Gabriel, SERVICE BREVETS BENDIX 44, Rue François 1er, F-75008 Paris (FR)**

## Description

La présente invention concerne les systèmes de commande et de modulation de pression de freinage pour au moins un circuit de freinage à anti-blocage d'un véhicule automobile, du type comprenant, dans un corps, un dispositif de commande de pression de freinage actionnable manuellement et comportant une sortie de fluide reliée au circuit de freinage, un réservoir de liquide de freinage monté sur le corps, et un moyen d'électrovalve d'isolation et de détente dans le circuit de freinage.

Un tel système est décrit par exemple dans le document GB-A-2 086 510. De tels systèmes comprennent classiquement un sous-ensemble constitué du dispositif de commande de pression de freinage, du type hydrostatique, hydrodynamique ou mixte, et d'un réservoir monté sur le corps dudit dispositif, et un moyen d'électrovalve d'isolation et de détente disposé dans le circuit de freinage, au voisinage des moteurs de freins associés, nécessitant donc des longueurs appréciables de conduit hydraulique de retour vers le réservoir compliquant l'aménagement du véhicule en en obérant considérablement les coûts, nécessitant un volume de liquide de freinage important et présentant en conséquence des temps de réponse accrus.

Il est connu, par ailleurs, de grouper des moyens d'électrovalve de circuits de freinage à anti-blocage dans un bloc de modulation, comme décrit par exemple dans le document GB-A-2 020 764, ce type de système comportant toutefois les mêmes inconvénients que ceux mentionnés précédemment.

La présente invention a pour objet de proposer un système de commande et de modulation de pression de freinage se présentant sous la forme d'un groupe compact, de faible encombrement, au fonctionnement fiable et précis, permettant de supprimer un grand nombre de conduits hydrauliques, de construction modulaire, de faibles coûts de fabrication et de montage, et permettant une mise en place rapide et aisée dans un véhicule sans nécessité d'adaptations particulières de ce dernier.

Pour ce faire, selon une caractéristique de l'invention, le moyen d'électrovalve est monté sur le corps et comporte une extrémité de décharge débouchant dans le réservoir.

Selon une caractéristique d'un mode particulier de réalisation de cette invention, le moyen d'électrovalve est du type à passage de fluide traversant et comprend un boitier disposé entre le corps et un prolongement du réservoir, ladite extrémité de décharge étant engagée de façon étanche dans ce prolongement du réservoir.

Selon une autre caractéristique d'un mode particulier de réalisation de l'invention, le moyen d'électrovalve comprend une partie de valve de distribution opposée à ladite extrémité de décharge et reçue dans un logement du corps communiquant avec la sortie de fluide du dispositif de commande de pression de freinage et avec le circuit de freinage.

D'autres caractéristiques et avantages de la présente invention ressortiront de la description suivante d'un mode de réalisation, donné à titre illustratif mais nullement limitatif faite en relation avec les dessins annexés sur lesquels:

- la Fig. 1 est une vue de face d'un groupe de commande et de modulation de freinage selon l'invention;
- la Fig. 2 est une vue de côté, partiellement en coupe longitudinale suivant le plan de coupe II-II de la Fig. 1;
- la Fig. 3 est une vue de face partiellement en coupe transversale suivant le plan de coupe III-III de la Fig. 2; et
- la Fig. 4 est une vue en coupe partielle suivant le plan de coupe IV-IV de la Fig. 1.

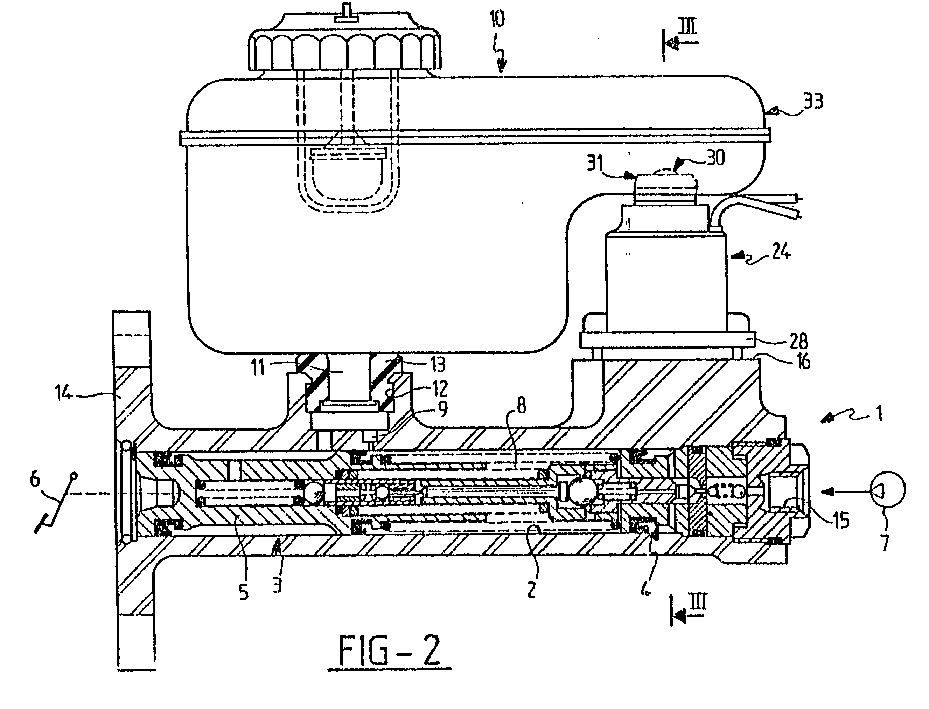

Le groupe de commande et de modulation de pression de freinage selon l'invention comprend essentiellement, comme on le voit mieux sur la Fig. 2, un dispositif de commande de pression de freinage actionné manuellement, désigné généralement par la référence 1, du type général décrit dans la demande de brevet français FR-A-2 560 133 du 29 février 1984 et, plus particulièrement, dans la demande de certificat d'addition français FR-A- 2 562 015 du 28 mars 1984 rattachée à la demande précédente, dont les contenus sont supposés intégrés ici pour référence. Brièvement, on rappelera que ce dispositif de commande de pression de freinage, du type hydrodynamique à sécurité hydrostatique, comprend, dans un alésage 2 d'un corps 3, un ensemble de clapet de distribution 4, actionné, via un piston de maître-cylindre 5 coulissant dans l'alésage 2, par une pédale de freinage 6, pour adresser un fluide sous pression modulée en provenance d'une source de fluide sous pression 7 vers une sortie de fluide 8 ménagée dans le corps et reliée à un circuit de freinage, comme on le verra plus avant. Pour assurer le fonctionnement en mode hydrostatique, en cas de défaillance de la source de pression 7, la chambre de maître-cylindre, définie dans l'alésage 2 entre le piston de maître-cylindre 5 et l'ensemble de valve de distribution 4, est alimentée, de façon classique, via un passage d'alimentation 9, par un réservoir, désigné généralement par la référence 10, comportant un raccord inférieur 11 engagé de façon étanche dans un logement 12 du corps 3 communiquant avec le passage 9, avec interposition d'un manchon d'étanchéité et de montage 13. Le corps 3 comporte, à une de ses extrémités, une collerette 14 pour son montage sur une paroi fixe d'un véhicule, et, à l'extrémité opposée de l'alésage 2, un raccord de connexion à la source de pression 7 définissant une ouverture d'entrée de fluide sous pression 15.

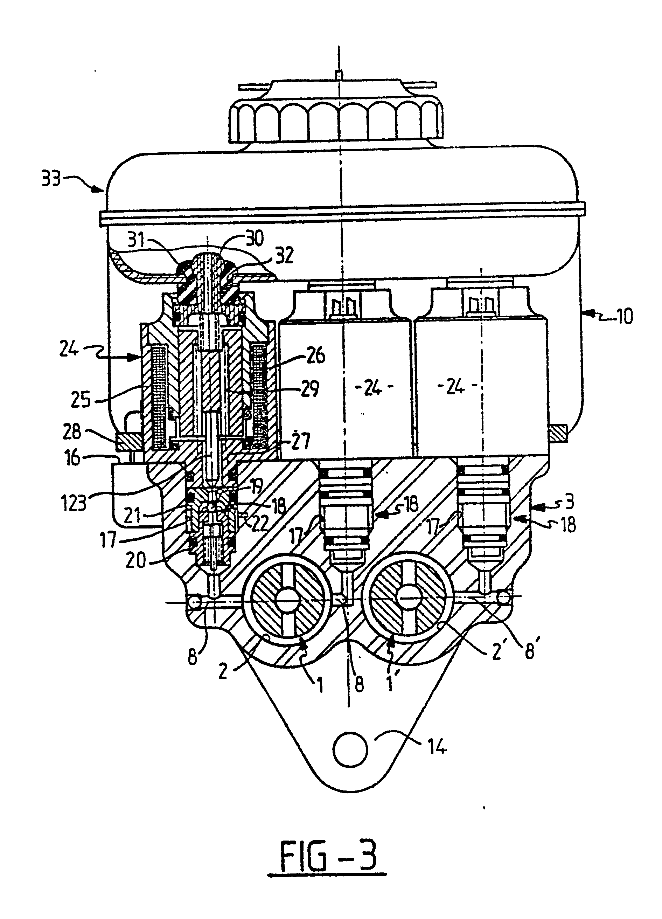

Comme on le voit bien sur les Fig. 2 et 3, le corps 3 comporte, au voisinage de son extrémité opposée à la collerette de montage 14, une partie massive présentant une face plane supérieure 16 perpendiculairement à laquelle est formé un logement cylindrique étagé 17 communiquant avec la sortie de fluide 8 du dispositif de commande de pression de freinage 1. Dans ce logement 17 est disposé un sous-ensemble de valve de distribution 18 comprenant une bille clapet 19 déplaçable entre deux sièges coaxiaux en vis-à-vis, formés respectivement sur une embase de valve inférieure 20 et sur une cage de valve supérieure 21, toutes deux engagées de façon étanche dans le logement 17 et définissant entre elles, dans le logement 17, un espace annulaire communiquant avec le circuit de freinage associé par un conduit 22 formé dans le corps 3 et comportant un orifice 23 de raccordement au circuit de freinage associé $l_1$.

La bille clapet 19 est actionnée par un plongeur 123 d'un sous-ensemble d'électrovalve 24 comprenant un boîtier en matériau magnétique 25 renfermant l'électro-aimant 26 et comportant un prolongement tubulaire inférieur 27 engagé de façon étanche dans le logement 17, le boîtier 25 comprenant une face plane inférieure plaquée contre la face 16 du corps 3 et étant bloqué en position sur ce dernier par une bride boulonnée 28. Dans le boîtier 25 et dans le plongeur 123, est ménagé un passage de fluide central traversant 29. Selon un aspect de l'invention, le boîtier 25 est refermé, à sa partie supérieure, par un élément tubulaire en matériau a magnétique 30 angagé de façon étanche au moyen d'un manchon élastomère d'étanchéité at de montage 31 dans un trou 32 formé dans la paroi inférieure d'un prolongement 33 du réservoir 10 prolongeant la partie supérieure de ce dernier pour former une partie en surplomb à l'aplomb du sous-ensemble d'électrovalve 24, la distance entre le fond de ce prolongement 33 et la face 16 étant déterminée en fonction de l'extension axiale du sous-ensemble d'électrovalve 24. On comprendre qu'avec un tel agencement, l'ensemble de clapet de commande 18 se trouve directement interposé entre la sortie de fluide 8 du dispositif 1 (qu'il fonctionne en mode normal hydrodynamique ou en mode d'assistance hydrostatique) et, d'une part, le circuit de freinage associé, via le conduit 22, ou d'autre part le réservoir 10, via le passage tubulaire intérieur 29 dans le sous-ensemble d'électrovalve 24.

En utilisation normale du dispositif de commande de pression de freinage (c'est-à-dire dans des conditions ne nécessitant pas un contrôle d'anti-blocage), le bobinage 26 du sous-ensemble d'électrovalve 24 n'est pas excité et la bille clapet 19 est maintenue élastiquement en appui contre le siège de le cage supérieure 21, isolant ainsi le circuit de freinage 22-$l_1$ du réservoir 10 et le maintenant en communication permanente avec la sortie de fluide 8 du dispositif 1. Par contre, en phase de contrôle d'anti-blocage, les capteurs associés aux roues à freiner du circuit de freinage $l_1$ et le bloc électronique d'anti-blocage actionnent sélectivement le sous-ensemble d'électrovalve 24 pour isoler le circuit de freinage 22-$l_1$ de la sortie de fluide 8, détendre la pression dans ce circuit de freinage en autorisant un retour de fluide vers le réservoir 10 et réadmettre sélectivement la pression de freinage dans le circuit de freinage.

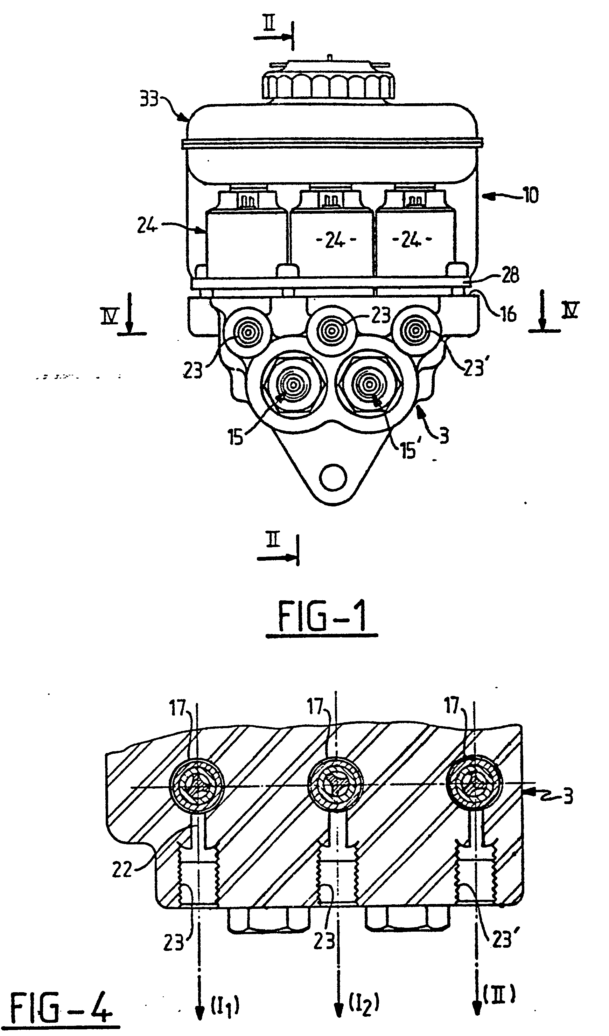

Dans le mode de réalisation représenté sur les Fig. 1, 3 et 4, on notera que le corps 3 comporte en fait deux alésages parallèles 2 et 2' recevant chacun un dispositif de commande de pression de freinage 1 et 1' (tous deux actionnés par la pédale 6), le dispositif de commande 1 comportant deux sorties de fluide 8, chacune pour une portion d'un circuit de freinage correspondant $l_1$ et $l_{2'}$, pourvu chacun d'un moyen d'électrovalve 18, 24 (typiquement pour les freins avant gauche et avant droit du véhicule), le second dispositif de commande de pression 1' comportant une sortie de fluide unique 8' communiquant, via un ensemble de clapet associé 18 avec un circuit de freinage propre II, typiquement le circuit de freinage de roues arrières du véhicule.

Quoique la présente invention ait été décrite en relation avec des modes de réalisation particuliers, elle ne s'en trouve pas limitée mais est au contraire susceptible de modifications et de variantes qui apparaîtront à l'homme de l'art.

**Revendications**

1. Système de commande et de modulation de pression de freinage pour au moins un circuit de freinage ($l_1$) à anti-blocage d'un véhicule automobile, comprenant, dans un corps (3), un dispositif de commande de pression de freinage (1), actionnable manuellement (6) et comportant une sortie de fluide (8, 8') reliée au circuit de freinage, un réservoir de liquide de freinage (10) monté sur le corps (3), et un moyen d'électrovalve d'isolation et de détente (18, 24) dans le circuit de freinage, caractérisé en ce que le moyen d'électrovalve (18, 24) est monté sur le corps (3) et comporte une extrémité de décharge (30) débouchant dans le réservoir (10).

2. Système selon la revendication 1, caractérisé en ce que le moyen d'électrovalve (24) est du type à passage traversant (29) et comprend un boîtier (25) disposé entre le corps (3) et un prolongement (33) du réservoir, ladite extrémité de décharge (30) étant engagée de façon étanche dans le prolongement (33) du réservoir.

3. Système selon la revendication 2, caractérisé en ce que le moyen d'électrovalve comprend une partie de valve de distribution (18) opposée à ladite extrémité de décharge (30) et reçue dans un logement (17) du corps (3) communiquant avec la sortie de fluide (8, 8') du dispositif de commande de pression de freinage (1, 1') et avec le circuit de freinage associé ($l_1$, $l_2$; II).

4. Système selon la revendication 2 ou la revendication 3, caractérisé en ce que l'extrémité de décharge est constituée d'un élément tubulaire en matériau amagnétique (30) rapporté sur le boîtier (25) et monté dans un orifice (32) du prolongement (33) du réservoir avec interposition d'un manchon d'étanchéité et de blocage (31).

5. Système selon la revendication 3 ou la revendication 4, caractérisé en ce que le boîtier d'électrovalve (25) comprend un prolongement tubulaire (27) engagé de façon étanche dans le logement (17) du corps (3).

6. Système selon l'une des revendications précédentes, caractérisé en ce que le dispositif de commande de pression de freinage (1, 1') comporte, dans le corps (3) une valve de dosage (4) entre une entrée de fluide (15) destinée à être reliée à une source de fluide sous pression (7) et ladite sortie de fluide (8, 8').

7. Système selon l'une des revendications précédentes, caractérisé en ce que le dispositif de commande de pression de freinage (1, 1') comporte en outre une chambre de maître-cylindre (8) limitée par un piston de maître-cylindre (5) actionnable manuellement (6), le réservoir (10) étant monté de façon étanche sur le corps (3) au moyen d'un raccord (11) communiquant avec cette chambre de maître-cylindre (8).

8. Système selon l'une quelconque des revendications précédentes, caractérisé en ce qu'il comprend deux moyens d'électrovalves (18, 24) montés en parallèle sur le corps (3), chacun dans une portion de circuit de freinage ($l_1$, $l_2$) reliée à la sortie de fluide (8) du dispositif de commande de pression de freinage (1).

9. Système selon la revendication 8, caractérisé en ce qu'il comprend deux dispositifs de commande de pression de freinage (1, 1') disposés en parallèle dans le corps (3), chacun pour au moins un circuit de freinage associé ($l_1$, $l_2$; II).

## Patentansprüche

1. Bremsdruck-Steuer- und Modulations-Anlage für mindestens einen Antiblockier-Bremskreis ($l_1$) für ein Kraftfahrzeug, mit einer in einem Körper (3) angeordneten Bremsdruck-Steuervorrichtung (1), die manuell (6) betätigbar ist und einen Strömungsmittelauslaß (8,8') aufweist, der mit dem Bremskreis verbunden ist, einem Bremsflüssigkeitsbehälter (10), der an dem Körper (3) angebracht ist, und einem elektrisch betätigbaren Entlastungs- und Sperrventil (18,24) in dem Bremskreis, dadurch gekennzeichnet, daß das Magnetventil (18,24) an dem Körper (3) angebracht ist und ein in dem Bremsflüssigkeitsbehälter (10) mündendes Ablaßende (30) aufweist.

2. Anlage nach Anspruch 1, dadurch gekennzeichnet, daß das Magnetventil (24) mit einem Durchgangskanal (29) versehen ist und ein Gehäuse (25) aufweist, das zwischen dem Körper (3) und einer Verlängerung (33) des Bremsflüssigkeitsbehälters angeordnet ist, wobei das Ablaßende (30) abgedichtet in die Verlängerung (33) des Bremsflüssigkeitsbehälters greift.

3. Anlage nach Anspruch 2, dadurch gekennzeichnet, daß das Magnetventil einen Abschnitt einer Verteilerventileinrichtung (18) aufweist, der dem Ablaßende (30) gegenüberliegt und in einer Aufnahme (17) des Körpers (3) sitzt, welche mit dem Strömungsmittelauslaß (8,8') der Bremsdruck-Steuervorrichtung (1,1') und mit dem zugehörigen Bremskreis $l_1 l_2$; II) in Verbindung steht.

4. Anlage nach Anspruch 2 oder 3, dadurch gekennzeichnet, daß das Ablaßende von einem rohrförmigen Teil aus unmagnetischem Material (30) gebildet wird, das an dem Gehäuse (25) angesetzt ist und in einer Öffnung (32) der Verlängerung (33) des Bremsflüssigkeitsbehälters unter Zwischenschaltung einer Dicht- und Sperrhülse (31) angebracht ist.

5. Anlage nach Anspruch 3 oder 4, dadurch gekennzeichnet, daß das Magentventilgehäuse (25) eine rohrförmige Verlängerung (27) aufweist, die abgedichtet in die Verlängerung (17) des Körpers (3) greift.

6. Anlage nach einem der vorhergehenden Ansprüche, dadurch gekennzeichnet, daß die Bremsdruck-Steuervorrichtung (1,1') in dem Körper (3) ein Dosierventil (4) zwischen einem mit einer Druckquelle (7) verbindbaren Strömungsmitteleinlaß (15) und dem Strömungsmittelauslaß (8,8') aufweist.

7. Anlage nach einem der vorhergehenden Ansprüche, dadurch gekennzeichnet, daß die Bremsdruck-Steuervorrichtung (1,1') ferner eine Hauptzylinderkammer (8) aufweist, die von einem manuell (6) betätigbaren Hauptzylinderkolben (5) begrenzt wird, wobei der Bremsflüssigkeitsbehälter (10) abgedichtet an dem Körper (3) mittels eines Anschlusses (11) angebracht ist, der mit dieser Hauptzylinderkammer (8) in Verbindung steht.

8. Anlage nach einem der vorhergehenden Ansprüche, dadurch gekennzeichnet, daß sie zwei Magentventile (18,24) aufweist, die parallel zueinander am Körper (3) angebracht sind, und zwar jedes in einem Abschnitt des Bremskreises ($l_1, l_2$), der mit dem Strömungsmittelauslaß (8) der Bremsdruck-Steuervorrichtung (1) verbunden ist.

9. Anlage nach Anspruch 8, dadurch gekennzeichnet, daß sie zwei Bremsdruck-Steuervorrichtungen (1,1') aufweist, die parallel zueinander in dem Körper (3) angeordnet sind, und zwar jede für mindestens einen zugehörigen Bremskreis ($l_1, l_2$; II).

## Claims

1. A brake pressure modulating and control system for at least one antiskid brake circuit ($l_1$) of an automotive vehicle, comprising, in a body (3), a brake pressure control device (1) manually (6) actuatable and comprising a fluid outlet (8,8') connected to the brake circuit, a brake liquid reservoir (10) mounted on the body (3), and an expansion and isolation solenoid valve means (18,24) in the brake circuit, characterized in that the solenoid valve means (18,24) is mounted on the body (3) and comprises a discharge end (30) opening into the reservoir (10).

2. System according to claim 1, characterized in that the solenoid valve means (24) is of the type having a traversing passage (29) and comprises a casing (25) disposed between the body (3) and an extension (33) of the reservoir, said discharge end (30) being sealingly engaged in the extension (33) of the reservoir.

3. System according to claim 2, characterized in that the solenoid valve means comprises a distribution valve portion (18) opposite said discharge end (30) and received in a recess (17) of the body (3) communicating with the fluid outlet (8,8') of the brake pressure control device (1,1') and with the associated braek circuit ($I_1I_2$;II).

4. System according to claim 2 or 3, characterized in that the discharge end is comprised of an tubular element (30) of nonmagnetic material provided on the casing (25) and mounted in an orifice (32) of the extension (33) of the reservoir with a blocking and sealing sleeve (31) being interposed therebetween.

5. System according to claim 3 or claim 4, characterized in that the solenoid valve casing (25) comprises a tubular extension (27) sealingly engaged in the recess (17) of the body (3).

6. System according to any of the preceding claims, characterized in that the brake pressure control device (1,1') comprises, in the body (3), a metering valve (4) between a fluid inlet (15) adapted to be connected to a pressure fluid source (7) and said fluid outlet (8,8').

7. System according to any of the preceding claims, characterized in that the brake pressure control device (1,1') further comprises a master cylinder chamber (8) limited by a manually (6) actuatable master cylinder piston (5), the reservoir (10) being sealingly mounted on the body (3) by means of a connection (11) communicating with said master cylinder chamber (8).

8. System according to any of the preceding claims, characterized in that it comprises two solenoid valve means (18,24) mounted in parallel on the body (3), each in a portion of the brake circuit ($I_1I_2$) connected to the fluid outlet (8) of the brake pressure control device (1).

9. System according to claim 8, characterized in that it comprises two brake pressure control devices (1,1') disposed in parallel in the body (3), each for at least one associated brake circuit ($I_1,I_2$;II).

**FIG-1**

**FIG-4**

FIG - 2

0 168 286

FIG -3